(19)

Europäisches
Patentamt
European
Patent Office
Office européen
des brevets

(11)     **EP 3 081 854 B1**

(12)     **EUROPEAN PATENT SPECIFICATION**

(45) Date of publication and mention
of the grant of the patent:
**13.03.2019   Bulletin 2019/11**

(51) Int Cl.:
***F21S 43/237*** *(2018.01)*      ***F21S 43/245*** *(2018.01)*
***B60Q 1/26*** *(2006.01)*      ***F21V 8/00*** *(2006.01)*

(21) Application number: **15163406.0**

(22) Date of filing: **13.04.2015**

(54) **LIGHT GUIDE WITH REDUCED LIGHT ATTENUATION**

LICHTLEITER MIT REDUZIERTER LICHTABSCHWÄCHUNG

GUIDE DE LUMIÈRE AVEC ATTÉNUATION DE LUMIÈRE RÉDUITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2016   Bulletin 2016/42**

(73) Proprietor: **SMR Patents S.à.r.l.**
**2453 Luxembourg (LU)**

(72) Inventor: **Schmidt, Oliver**
**70329 Stuttgart (DE)**

(74) Representative: **Weber-Bruls, Dorothée**
**Jones Day**
**Nextower**
**Thurn-und-Taxis-Platz 6**
**60313 Frankfurt am Main (DE)**

(56) References cited:
**WO-A1-2013/104345      DE-U1-202012 104 086
FR-A1- 2 964 917      US-A1- 2006 210 236
US-A1- 2010 309 677      US-A1- 2011 058 385
US-A1- 2012 069 592      US-A1- 2012 170 304
US-A1- 2014 078 764      US-A1- 2014 334 172
US-A1- 2015 009 707**

Remarks:
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Description

FIELD OF THE INVENTION

The invention relates to a light guide of a turn signal indicator for use in an automotive environment with optimized light attenuation properties.

BACKGROUND OF THE INVENTION

The use of light guides in the automotive environment is advantageous for many reasons. For example, a light source does not have to be placed at the location where light should be emitted. Rather, the light of a light source can be transmitted via a light guide and decoupled from the latter at a desired area, which may be distant from the light source. The use of a light guide thus leads to more design flexibility. Further, the light decoupling characteristics can be different from the light source, e.g. the light source may be a LED with a small radiation angle, whereas the light guide can decouple the light from the light source via a larger area.

Known light guides, e.g. used in turn signal indicators, loose a substantial fraction of light due to the geometry as well as the mechanical connection of the light guide that is required for its mechanical coupling to a receiving structure, e.g. in a rear view mirror. This problem affects especially one-piece or monobloc light guide concepts where the light guide represents the outer surface, e.g. of a turn signal indicator.

US 2012/0170304 A1 refers to a light guide illumination system comprising: an optical light guide having opposite ends; a connector comprising a housing, at least one light source contained within the housing, and electrical contacts for connecting the light source to a power supply, with the connector being joined to one end of the optical light guide so as to supply light into the one end of the optical light guide such that there is no break in illumination at the joint between the connector and the optical light guide end, as seen by a viewer, when the optical light guide end is illuminated; a light guide rail comprising a base and two sides defining a channel having a length, with the optical light guide and the connector being held in and movable along the channel; and two strip-like electrical conductors disposed in the channel and being electrically connectable to a power supply, with one of the strip-like electrical conductors being on each side of the light guide rail and in contact with at least one of the electrical contacts, such that the connector is moveable along the light guide rail while each electrical contact remains in contact with one strip-like electrical conductor. Such light guides may be used in the automotive field such as loudspeaker surrounds.

US 2015/0009707 A1 refers to an elongate support for supporting and securing an elongate light guide, the support comprising: an elongate base; and opposing arms extending from the base and defining an elongate opening therebetween opposite the base, each arm comprising a pair of spaced apart inwardly-curved regions for engaging and securing an elongate light guide within the support. Respective light guides can be used as side-light guides in road vehicles, for interior

and exterior lighting.

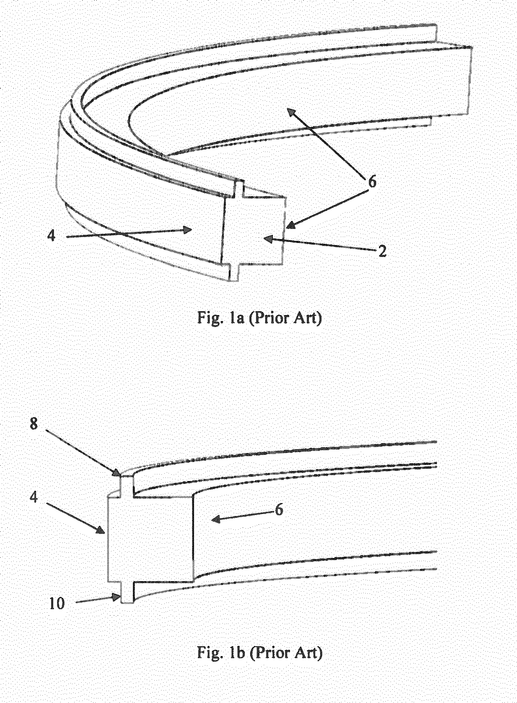

A light guide according to the state of the art is illustrated in figure 1. In particular, figure 1a shows a bent monobloc light guide 2 having a front surface 4 for the decoupling of light from the light guide and a back surface 6. As can be seen in figure 1b, the light guide 2 has connection elements 8, 10 for mechanically coupling the light guide to a respective receiving structure. The connection elements 8, 10 protrude from an upper and lower surface of the light guide straight and at right angles and are located close to the front surface 4.

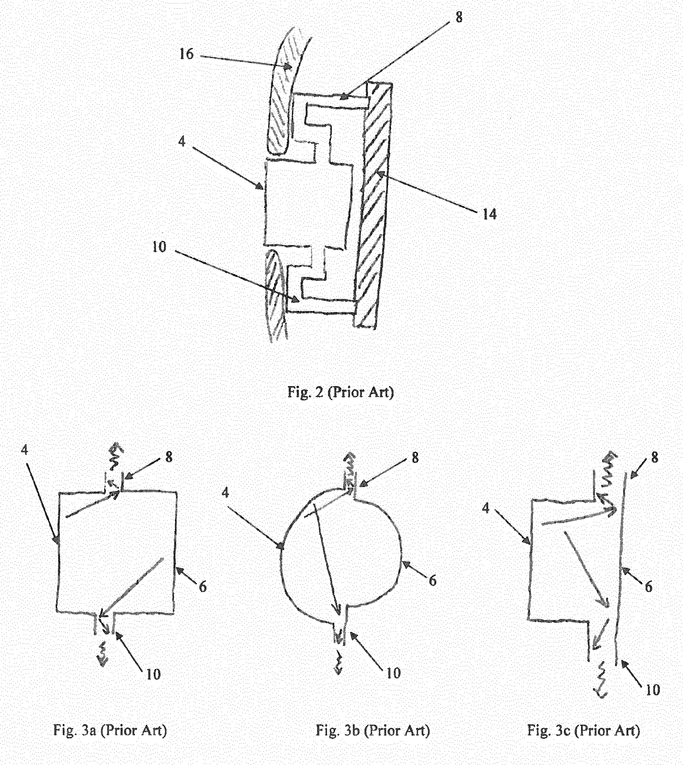

Figure 2 shows a light guide according to the state of the art assembled via connection elements 8, 10 between a housing 14, comprising a respective receiving structure, and a cap 16. As can be seen, the front surface 4 of the light guide forms part of the outer surface together with the cap 16.

Figure 3 shows the optical beam paths of different state of the art light guides with focus on the losses resulting in a high light attenuation. The arrows show exemplary light beams which enter the connection elements and are thus almost entirely lost. Figure 3a shows a light guide which is rectangular in cross section, wherein some light beams enter the connection elements, which protrude from the upper and lower surface of the light guide in the middle of its front and back surface. Figure 3b shows a circular light guide with different radii of the front and the back surface. In this case the radius of the front surface is greater than the radius of the back surface. Also here light beams enter the connection elements, which protrude from the upper and lower surface of the light guide in the middle of the front and back surface. Figure 3c shows a rectangular light guide similar to the light guide of figure 3a, wherein the connection elements are located not in the middle of front and back surface but at the back surface of the light guide such that the connection elements and the back surface form a common straight surface.

The invention aims at providing an improved light guide with reduced light attenuation.

## SUMMARY OF THE INVENTION

The invention provides a light guide according to claim 1, which is adapted to receive light from a light source like a bulb or LED or gas discharge lamp or any other light source which can be used in an automotive environment. The light guide comprises at least one elongated light guide element for guiding light. Considering the light guide element in cross section, the light guide element has a front surface and a back surface, wherein the front surface is for decoupling light from the light guide. The back surface preferably has good reflective properties and can be partially or entirely provided with a reflective material and/or small optics and/or may comprise optical features such as micro-structured surfaces and/or prisms and/or grooves. The mentioned features of the back surface may help to couple light out of the light guide via the front surface. There may be one or more light decoupling areas which may cover a part or the entire front surface of the light guide element. Further, the light guide comprises one or more connection elements which protrude from the light guide element. The connection element protrudes, in cross section, from an upper and/or lower surface of the light guide element and is adapted to mechanically connect the light guide to a respective receiving structure, e.g. provided in a rear view mirror of a vehicle.

The basic idea of the invention is to locate the connection element close to the back surface of the light guide element, i.e. at least closer to the back surface than to the front surface, and the light guide element provides at least one convexly curved back surface. This may be true for parts of EUI-1201591631v2 the light guide element or for the entire length of the light guide element. This may significantly lower the light attenuation as less light escapes via the connection element and more light may be reflected back into the light guide element. In addition, over at least 20% or at least 30% or at least 40% or at least 50% or at least 60% or at least 70% or at least 80% or at least 90 % of the minimum length of the light guide element and/or over at least 20% or at least 30% or at least 40% or at least 50% or at least 60% or at least 70% or at least 80% or at least 90 % of the maximum height of the light guide element in cross section the following applies:

$$X < B_B/H_L + B_B/(10 * D_L) < Y,$$

wherein

$X = 0.8$;
$Y = 10$ to $30$ or $15$ to $30$ or $20$ to $30$ or $25$ to $30$ or around $30$
$B_B$ = convex bending radius of the back surface of the light guide element in cross section;
$H_L$ = maximum height of the light guide element in cross section; and
$D_L$ = maximum depth of the light guide element in cross section.

In other words, the back surface of the light guide element is convexly curved in order to reflect light from the back surface into the light guide element and minimize the overall light attenuation of the light guide. The convex bending radius of the back surface of the light guide element in cross section may be in the range of $0.6 * H_L$ to $25 * H_L$.

The term "minimum length of the light guide element" is to be understood throughout the description as the effective length, i.e. the total length which is optically active. For example, if the light guide element comprises multiple light guide element pieces, it is the total length of all pieces that is of interest.

Optionally, over at least 20% or at least 30% or at least 40% or at least 50% or at least 60% or at least 70% or at least 80% or at least 90 % of the minimum length of the light guide element the following applies:

$$W_C < 0.3 * D_L,$$

wherein

$W_C$ = minimum width of the connection element at the light guide element in cross section; and
$D_L$ = maximum depth of the light guide element in cross section.

Hence, the width of the connection element should be rather small at the light guide element as compared to the maximum depth of the light guide element to avoid that much light enters the connection element and thus increases the overall light attenuation of the light guide. The thickness of the connection element can vary, e.g. it can be rather small at the vicinity of the light guide element and increase then in thickness with increasing distance from the light guide element. Also, the thickness can vary along the longitudinal axis of the light guide element.

The connection element and the back surface of the light guide element may form a common surface, which is convexly curved in cross section. In particular, the common surface may be formed by the side wall of the connection element which is closer to the back surface. The common surface may be without a kink, i.e. one smooth and convexly curved surface. Alternatively, there may be a certain distance between the back surface of the light guide element and the respective wall of the connection element, e.g. forming a step. Such a step may contribute to the mechanical connection of the light guide to a respective receiving structure.

The front surface of the light guide element may be substantially planar in cross-section. Alternatively, the front surface can be convex or concave. Also, any combination is possible, e.g. to achieve different light decoupling characteristics in different light decoupling areas of the light guide.

The light guide may be a monobloc light guide. In other words the light guide can be a one piece light guide. The light guide element and the connection element can be integrally formed, e.g. molded. Further, the light guide may be bent along its longitudinal axis. In case the front surface of the light guide element is an outer surface there can be no further element or layer or there can be a coating such as a protection layer.

The one or more connection elements of the light guide may protrude from the light guide element over at least 20% or at least 30% or at least 40% or at least 50% or at least 60% or at least 70% or at least 80% or at least 90 % of the minimum length of the light guide element. There can be two connection elements, whereas a first connection element protrudes upwards from the upper surface of the light guide element and a second connection element protrudes downwards from the lower surface of the light guide element. The two connection elements may be different, e.g. the first one can protrude from the upper surface of the light guide element in an inclined way and the second connection element can protrude parallel to the front surface or at a right angle from the lower surface. Alternatively, the connection elements may be similar, e.g. both inclined towards the front surface. In addition, the connection element may protrude first in an inclined way and then parallel to the upper /lower surface. The connection element may also protrude in a bent way, e.g. so that one wall of the connection element forms a smooth common surface with the back surface.

Optionally, over at least 20% or at least 30% or at least 40% or at least 50% or at least 60% or at least 70% or at least 80% or at least 90 % of the minimum length of the light guide element the following applies:

$$D_{CB} < 0.1 * D_L,$$

wherein

$D_{CB}$ = minimum distance between the connection element and the back surface of the light guide element; and
$D_L$ = maximum depth of the light guide element.

In other words, the connection element can be located rather close to the back surface of the light guide element, but there can be a certain distance, e.g. forming a step between the back surface of the light guide element and the wall of the connection element which is closer to the back surface of the light guide element.

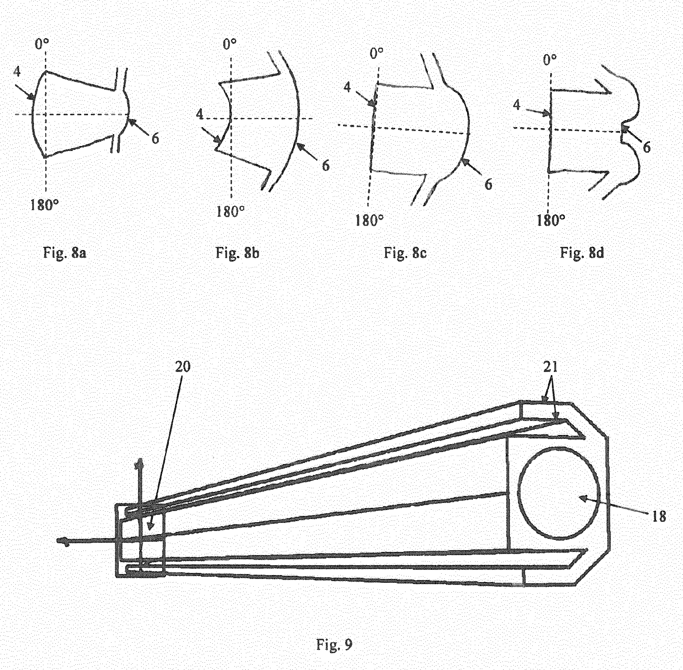

Optionally, over at least 20% or at least 30% or at least 40% or at least 50% or at least 60% or at least 70% or at least 80% or at least 90 % of the minimum length of the light guide element the connection element is inclined. In particular, the connection element can be inclined from the upper surface of a light guide, in cross section, between 280 degree (towards the front surface) and 15 degree (towards the back surface) and/or the reversed range from the lower surface, namely from the lower surface between 260 degree (towards the front surface) and 165 degree (towards the back surface). The front surface or a corresponding imaginary front surface line, as exemplarily illustrated in figure 8, forms the 0 degree / 180 degree reference line. The mentioned inclination range is measured at or adjacent to or in the vicinity of the light guide element. At other locations, i.e. more distant from the light guide element, the connection element may have other inclinations, depending on the respective receiving structure.

Optionally, over at least 20% or at least 30% or at least 40% or at least 50% or at least 60% or at least 70% or at least 80% or at least 90 % of the minimum length of the light guide element the following applies:

$$B_F > 0.7 * H_L,$$

wherein

$B_F$ = minimum cross sectional bending radius of the front surface of the light guide element, wherein edge fillets of the front surface, if any, are not considered; and
$H_L$ = maximum height of the light guide element in cross section.

The invention further relates to a receiving structure comprised by a vehicle for receiving a light guide according to the invention. Also, the invention relates to a rear view mirror for a vehicle, which comprises a receiving structure for receiving a light guide according to the invention. In particular, the receiving structure, e.g. of the vehicle or the rear view mirror receives the light guide via the one or more connection elements. Optionally, the front surface of the light guide element forms part of the outer surface of the rear view mirror. The light guide is part of a warning and/or indicating device in form of a turn signal indicator.

**BRIEF DESCRIPTION OF THE DRAWINGS**

The following schematic drawings show aspects of the invention for improving the understanding of the invention in connection with some exemplary illustrations, wherein

Figure 1a, b     show a one-piece light guide according to the state of the art;
Figure 2     shows an assembled one-piece light guide according to the state of the art;
Figure 3a-c     show the optical beam paths of different state of the art light guides;
Figure 4a, b     show an exemplary one-piece light guide according to the invention;
Figure 5     shows a further exemplary one-piece light guide according to the invention;
Figure 6     shows a further exemplary one-piece light guide according to the invention;
Figure 7a-e     show the optical beam paths of different one-piece light guides according to the invention;
Figure 8a-d     show possible front and back surfaces of different light guides according to the invention;
Figure 9     shows an experimental setup with a light guide for the tests shown in figures 10 and 11;
Figure 10     shows different light guides and its respective light attenuation;
Figure 11     shows attenuation values of a light guide depending on geometrical relationships.

It is noted that the cross-section of the light guide according to the invention may vary along the length of the light guide, e.g. the position of mechanical connections, shape of front, upper, lower and/or back surfaces. Also, mechanical connection elements may be much more complex than the illustrated ones.

**DETAILED DESCRIPTION**

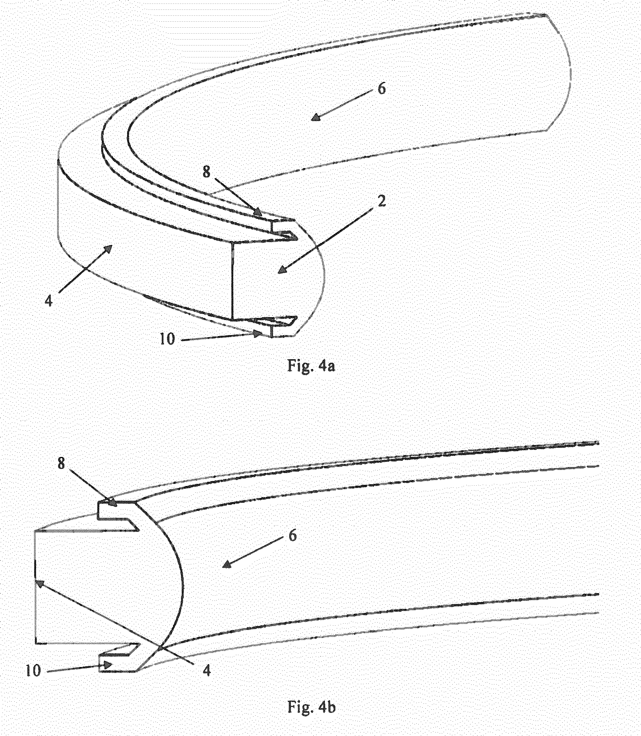

Figure 4a shows an exemplary monobloc light guide according to the invention. The light guide element 2 is bent along its longitudinal axis and has a front surface 4 and a back surface 6. The front surface 4 is flat in cross section and is adapted to couple out light at least at certain areas. The back surface 6 is convexly curved and may comprise a reflective material and/or a scattering coating and/or small optics, e.g. for design purposes. Figure 4b shows connection elements 8 and 10 which protrude from the upper and lower surfaces of the light guide element 2. In particular, the connection elements 8, 10 protrude in an inclined manner, namely inclined towards the front surface 4. A second portion of the connection elements 8, 10, which is not in the vicinity of the light guide element 2, is parallel to the upper and lower surface of the light guide element 2. The back surface 6 and a portion of the connection elements 8, 10 form a common surface, which is convexly curved.

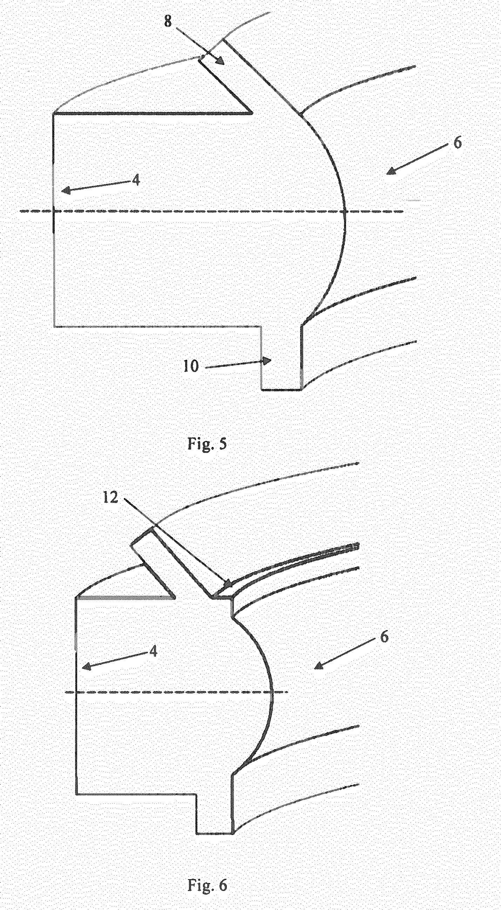

Figure 5 shows a further exemplary one-piece light guide according to the invention, wherein the upper connection element 8, protruding from the upper surface of the light guide, is inclined towards the front surface 4 of the light guide element 2. The lower connection element 10 protrudes in a right angle from the lower surface of the light guide element 2. In the light guide according to figure 5, the connection elements 8, 10 are provided such that there is no distance between the connection elements 8, 10 and the back surface 6. In other words, the connection elements 8, 10 form a common surface with the back surface 6 of the light guide element 2. The transition from the back surface 6 to the upper connection element 8 is smooth, i.e. without a kink, whereas the transition from the back surface 6 to the lower connection element 10 has a kink.

Figure 6 shows a further exemplary monobloc light guide according to the invention similar to the one illustrated in figure 5. The differences will be explained in the following. The upper connection element 8 is located such that there is a certain distance to the back surface 6 which results in a step 12. Further, the distance between the lower connection element 10 and the front surface 4 of the light guide element 2 is increased such that the lower connection element 10 is shifted into the convexly curved back surface 6. In addition, the radius of the convexly curved back surface 6 is smaller.

Inclinations and orientations, e.g. of the connection element, are preferably based on the center line (in cross section from the front surface to the back surface at the half maximum height) as illustrated in figures 5 and 6 in form of a dashed line. In this way the inclination is also clear in case of a non-flat front surface or in case of non-flat or inclined upper and lower surfaces. For non-symmetrical light guide elements also the front surface or upper or lower surface can be used provided that the respective surface is flat.

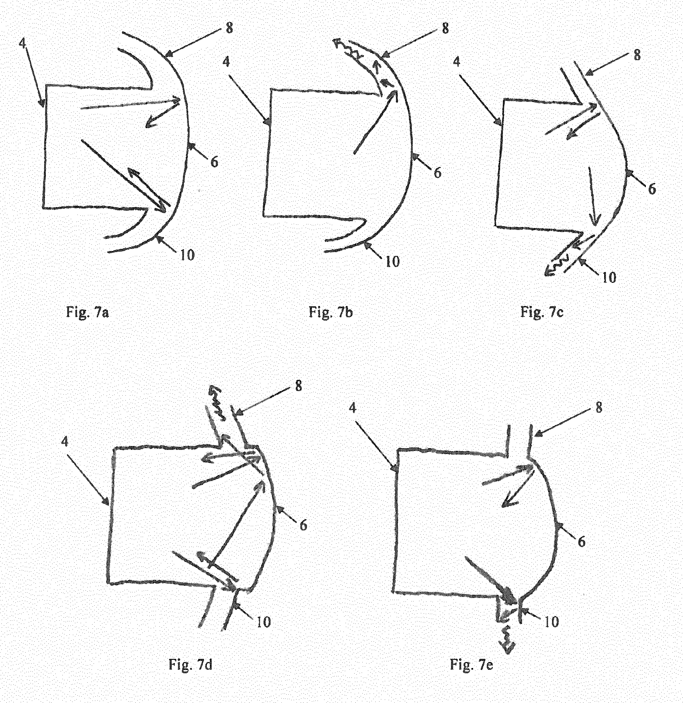

Figure 7 shows optical beam paths, illustrated as arrows, of exemplary one-piece light guides according to the invention. The light guides as illustrated in figures 7a, 7b and 7c have different convexly curved back surfaces 6, wherein the connection elements 8, 10 form a common and smooth surface with the back surface 6. In particular, the convexly curved back surface 6 shown in figure 7a has a rather large bending radius, i.e. is rather flat, whereas the back surface 6 shown in figure 7b has a smaller bending radius. The back surface 6 shown in figure 7c has the smallest bending radius from the light guides shown in figures 7a to 7c. Figure 7d shows a light guide, wherein the connection elements 8, 10 protrude inclined but straight from the upper and lower surfaces of the light guide element 2. Further, the connection elements 8, 10 protrude at a certain distance from the back surface 6. The connection elements 8, 10 as illustrated in figure 7e protrude in a right angle from the upper and lower surfaces of the light guide element 2, however, there is no distance between the connection elements 8, 10 and the back surface 6 like in figure 7d.

As can be taken from the exemplarily included arrows representing light beams, the convexly curved back surface 6 in combination with the location of the connection elements 8, 10, namely close to the back surface 6, as well as a rather small width of the connection elements in relation to the depth of the light guide element 2, helps to avoid that light enters the connection elements 8, 10. Also, as can be taken from figures 7d and 7e, it is advantageous to locate the connection elements as close to the back surface 6 as possible to minimize light attenuation.

Figures 8a to 8d show possible front and back surfaces 4, 6 of a light guide according to the invention. In particular, the front surface 4 can be convexly curved as illustrated in figure 8a or concavely as illustrated in figure 8b. Also, the front surface 4 can be flat as illustrated in figures 8c and 8d. In the light guide according to figure 8a, the light guide tapers in cross section from the front surface 4 to the back surface 6 and the upper and lower surfaces of the light guide element 2 are inclined. In contrast, figure 8b shows a light guide element which tapers from the back surface 6 towards the front surface 4. This can help to scatter or focus light to be decoupled from the light guide. The back surface 6 can have various convex shapes, e.g. can have smaller or larger bending radii or have two convexities as illustrated in figure 8d.

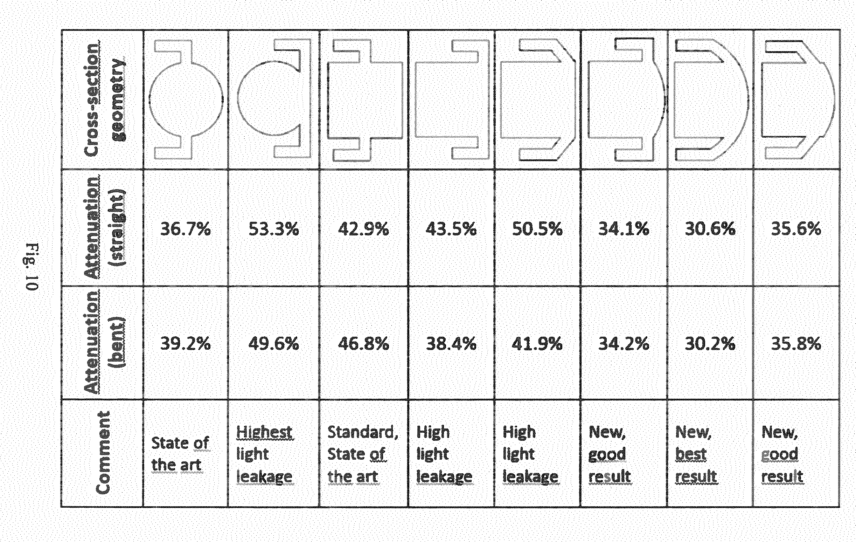

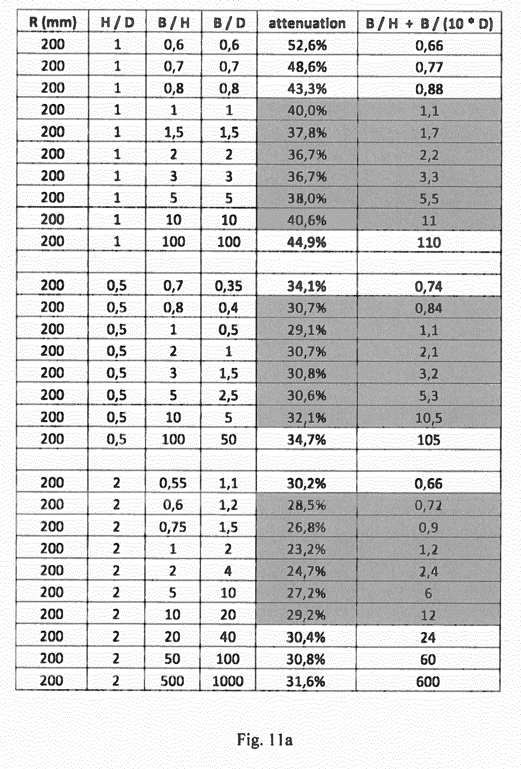

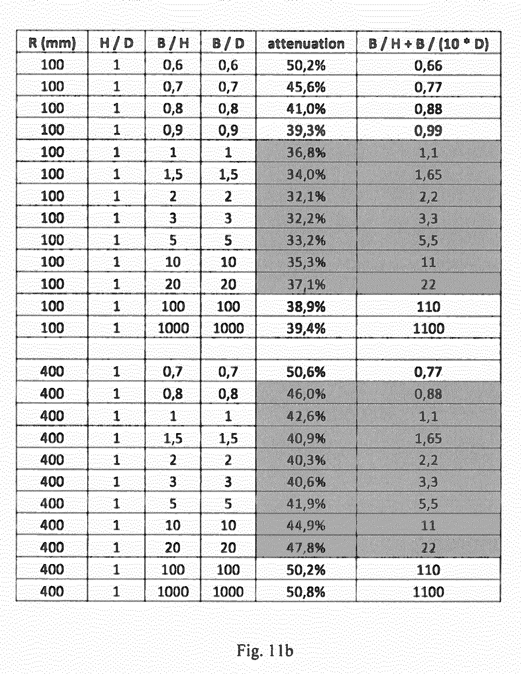

Figure 9 shows an experimental setup with a light guide for the tests shown in figures 10 and 11. Light is coupled into the light guide at a first end portion 18 and a detector is provided at a second end portion 20 of the light guide to determine light attenuation. The horizontal surfaces 21 of the connection elements of the light guide are set to be perfectly absorbing surfaces, i.e. these surfaces neither reflect nor transmit light. The attenuation is obtained via ray-optics simulations using Optis SPEOS CAA V5 Based, version 17.1 with the following parameters:

| | | |
|---|---|---|
| Light source: | circular area with 8 mm diameter; | |
| | Lambertian emission; | |
| | 590 nm wavelength (monochromatic); | |
| | 0.1 mm distance to light guide. | |
| Light guide: | PMMA; | |
| | Refractive index 1.49 at a wavelength of 590 nm; | |
| | 4% absorption along 1 m at a wavelength of 590 nm; | |
| Geometry: | Light guide: | length: 200 mm; |
| | | Height: 10 mm; |
| | | Depth: 10 mm; |
| | | Straight / Bent with bending radius of 200 mm; |
| | Connection elements: thickness: 1.5 mm; | |
| | | perfectly absorbing surfaces (only horizontal surfaces 21). |

Figure 10 shows different light guides and its light attenuation, i.e. the fraction of light which is coupled into the light guide and that does not reach the detector.

The first test shows a light guide which is circular in cross section and has upper and lower connection elements protruding straight and at a right angle from the middle portion between front surface and back surface of the light guide. The light attenuation is 36.7% (straight) and 39.2% (bent).

The second test shows a light guide which is similar to the light guide of the first test, however, the upper and lower connection elements are shifted towards the back surface of the light guide such that the back surface is flat. The light attenuation is 53.3% (straight) and 49.6% (bent).

As can be taken from the first and second tests, for straight light guides with state-of-the-art geometries, mechanical connections at the middle portion or center of the cross-section result in lower light attenuation for straight light guides.

The third test shows a light guide which has a rectangular shape in cross section and has upper and lower connection elements protruding straight and at a right angle from the upper and lower surfaces. The connection elements are located at the middle portion, i.e. between the back and front surfaces of the light guide. The light attenuation is 42.9% (straight) and 46.8% (bent). The fourth test shows a light guide similar to the light guide of the third test, however, the connection elements are located at the side of the back surface of the light guide. The light attenuation is 43.5% (straight) and 38.4% (bent).

The fifth test shows a light guide which has a rectangular shape in cross section and has upper and lower connection elements protruding inclined towards the front surface from the upper and lower surfaces. The connection elements are located adjacent to the back surface. The light attenuation is 50.5% (straight) and 41.9% (bent).

As can be taken from the third to fifth tests, for bent light guides with mechanical connections adjacent to or at the back surface of the light guide reduce the light leakage as compared to geometries with central connections like in the third test.

The sixth test shows a light guide similar to the light guide of the fifth test, however, the back surface is not flat but convexly curved. The light attenuation is 34.1% (straight) and 34.2% (bent).

The seventh test shows a light guide which has a rectangular shape in cross section and has upper and lower connection elements protruding inclined and bent towards the front surface from the upper and lower surfaces. The connection elements are located adjacent to the back surface. The back surface of the light guide and the adjacent portions of the connection elements form a common convexly curved surface without a kink. The light attenuation is 30.6% (straight) and 30.2% (bent).

The eights test shows a light guide similar to the fifth test, however, the connection elements protrude not inclined but straight and there is a distance between the back surface and connection elements. Hence, the back surface of the light guide does not form a smooth surface with the connection elements like in the seventh test. The light attenuation is 35.6% (straight) and 35.8% (bent).

As can be taken from the sixth to eights tests, cross-section geometries with mechanical connections close to a convexly curved back surface provide a reduced light leakage as compared to state-of the art geometries. The light leakage is reduced both for straight and bent light guides.

Figure 11 shows attenuation values of a light guide depending on geometrical relationships, wherein

R is the longitudinal bending radius, i.e. along the light guide axis;
H is the maximum height of the light guide element 2 in cross section;
D is the maximum depth of the light guide element 2 in cross section; and
B is the convex bending radius of the back surface 6 of the light guide.

In figure 11a the longitudinal bending radius is 200 mm and in figure 11b the longitudinal bending radius is 100 mm and 400 mm, respectively. The grey shaded areas show geometric relationships with a significant improvement of the light transmission, i.e. low light attenuation. As can be seen, there is an optimum transmission of light in a certain geometric range, which strongly depends on the convex bending radius of the back surface 6 of the light guide. As can be seen, the convex bending radius of the back surface 6 is preferably in the range of $0.6 * H_L$ to $25 * H_L$. In other words, the relationship $B/H + B/(10*D)$ is preferably in the range of 0.8 to 30.

**Reference Signs**

2 light guide element
4 front surface of light guide element
6 back surface of light guide element
8 upper connection element
10 lower connection element
12 step
14 housing
16 cap
18 first portion of a light guide
20 second portion of a light guide
21 horizontal surface of connection element

**Claims**

**1.** Light guide for use in an automotive environment, preferably as part of a turn signal indicator and/or a lamp for illuminating an area inside or outside a vehicle, and adapted to receive light from a light source, the light guide comprising:

at least one elongated light guide element (2) having, in cross section, a front surface (4) for decoupling light from the light guide and a back surface (6) having reflective properties, the front surface (4) at least partially comprising a light decoupling area; and

at least one connection element (8, 10) protruding, in said cross section, from an upper and/or lower surface of the light guide element (2) for mechanically connecting the light guide to a receiving structure,

wherein the connection element (8, 10) is located closer to the back surface (6) of the light guide element (2) than to the front surface (4) and the back surface (6) is at least partially convexly curved in said cross section, and wherein light is coupled out of the light guide through the front surface (4), and

wherein over at least 30 % of the minimum length of the light guide element (2) and over at least 30 % of the maximum height of the light guide element (2) in cross section the following applies:

$$0.8 < (B_B/H_L + B_B/(10 * D_L)) < 30,$$

wherein

$B_B$ = convex bending radius of the back surface (6) of the light guide element in cross section;

$H_L$ = maximum height of the light guide element (2) perpendicular to a center line in cross section, where the center line is from the front surface (4) to the back surface (6) at half maximum height; and

$D_L$ = maximum depth of the light guide element (2) along the center line in cross section.

2.  The light guide of claim 1, wherein the connection element (8, 10) and the back surface (6) of the light guide element (2) form a common and convexly curved surface in cross section, preferably without a kink.

3.  The light guide of claim 1 or 2, wherein the front surface (4) is substantially planar or convex or concave in cross-section.

4.  The light guide of any of the foregoing claims, wherein the light guide is a monobloc light guide.

5.  The light guide of any of the foregoing claims, wherein the light guide is bent along its longitudinal axis.

6.  The light guide of any of the foregoing claims, wherein the light guide element (2) and the connection element (8, 10) are integrally formed.

7.  The light guide of any of the foregoing claims, wherein the connection element (8, 10) protrudes from the light guide element (2) over at least 30% of the minimum length of the light guide element (2).

8.  The light guide of any of the foregoing claims, wherein over at least 30% of the minimum length of the light guide element (2) the following applies:

$$D_{CB} < 0.1 * D_L,$$

wherein $D_{CB}$ = minimum distance between the connection element (8, 10) and the back surface (6) of the light guide element (2) parallel to the center line in cross section.

9.  The light guide of any of the foregoing claims, wherein over at least 30% of the minimum length of the light guide element (2) the following applies:

$$B_F > 0.7 * H_L,$$

wherein

$B_F$ = minimum cross sectional bending radius of the front surface (4) of the light guide element (2), wherein edge fillets of the front surface (4) are not considered; and

$H_L$ = maximum height of the light guide element (2) in cross section.

10. The light guide of any of the foregoing claims, wherein over at least 30% of the minimum length of the light guide element (2) the following applies:

$$W_C < 0.3 * D_L,$$

wherein

$W_C$ = minimum width of the connection element (8, 10) at the light guide element (2) parallel to the center line in cross section; and

$D_L$ = maximum depth of the light guide element (2) in cross section.

11. Receiving structure comprised by a vehicle for receiving a light guide of any of claims 1 to 10 via the connection element (8, 10).

12. Rear view mirror for a vehicle comprising a receiving structure for receiving a light guide of any of claims 1 to 10 via the connection element (8, 10).

13. Rear view mirror of claim 12, wherein the front surface (4) of the light guide element (2) forms part of the outer surface of the rear view mirror.

## Patentansprüche

1. Lichtleiter zur Verwendung in einer Kraftfahrzeugumgebung, vorzugsweise als Teil eines Fahrtrichtungsanzeigers und/oder einer Lampe zum Beleuchten eines Bereiches innerhalb oder außerhalb eines Fahrzeuges, und dazu geeignet, Licht aus einer Lichtquelle zu empfangen, wobei der Lichtleiter umfasst:

mindestens ein längliches Lichtleiterelement (2) mit, im Querschnitt, einer Vorderseite (4) zum Auskoppeln von Licht aus dem Lichtleiter und einer Rückseite (6) mit Reflexionseigenschaften, wobei die Vorderseite (4) zumindest teilweise einen Lichtauskopplungsbereich umfasst; und

mindestens ein Verbindungselement (8, 10), das in dem Querschnitt aus einer Ober- und/oder Unterseite des Lichtleiterelements (2) heraussteht, um den Lichtleiter mechanisch mit einer Aufhahmestruktur zu verbinden, wobei sich das Verbindungselement (8, 10) näher an der Rückseite (6) des Lichtleiterelements (2) als an der Vorderseite (4) befindet und die Rückseite (6) in dem Querschnitt zumindest teilweise konvex gekrümmt ist und wobei Licht durch die Vorderseite (4) aus dem Lichtleiter gekoppelt wird, und

wobei auf über mindestens 30 % der Minimallänge des Lichtleiterelements (2) und auf über mindestens 30 % der Maximalhöhe des Lichtleiterelements (2) im Querschnitt das Folgende zutrifft:

$$0{,}8 < (B_B/H_L + B_B/(10 * D_L)) < 30,$$

wobei

$B_B$ = konvexer Krümmungsradius der Rückseite (6) des Lichtleiterelements im Querschnitt;

$H_L$ = Maximalhöhe des Lichtleiterelements (2) senkrecht zu einer Mittellinie im Querschnitt, wo die Mittellinie von der Vorderseite (4) zu der Rückseite (6) auf halber Maximalhöhe verläuft; und

$D_L$ = Maximaltiefe des Lichtleiterelements (2) entlang der Mittellinie im Querschnitt.

2. Lichtleiter nach Anspruch 1, wobei das Verbindungselement (8, 10) und die Rückseite (6) des Lichtleiterelements (2) eine gemeinsame und konvex gekrümmte Oberfläche im Querschnitt, vorzugsweise ohne Knick, bilden.

3. Lichtleiter nach Anspruch 1 oder 2, wobei die Vorderseite (4) im Wesentlichen planar oder konvex oder konkav im Querschnitt ist.

**4.** Lichtleiter nach einem der vorangehenden Ansprüche, wobei der Lichtleiter ein Monoblock-Lichtleiter ist.

**5.** Lichtleiter nach einem der vorangehenden Ansprüche, wobei der Lichtleiter entlang seiner Längsachse gekrümmt ist.

**6.** Lichtleiter nach einem der vorangehenden Ansprüche, wobei das Lichtleiterelement (2) und das Verbindungselement (8, 10) einstückig ausgebildet sind.

**7.** Lichtleiter nach einem der vorangehenden Ansprüche, wobei das Verbindungselement (8, 10) auf über mindestens 30 % der Minimallänge des Lichtleiterelements (2) aus dem Lichtleiterelement (2) heraussteht.

**8.** Lichtleiter nach einem der vorangehenden Ansprüche, wobei auf über mindestens 30 % der Minimallänge des Lichtleiterelements (2) das Folgende zutrifft:

$$D_{CB} < 0{,}1 * D_L,$$

wobei $D_{CB}$ = Minimalabstand zwischen dem Verbindungselement (8, 10) und der Rückseite (6) des Lichtleiterelements (2) parallel zu der Mittellinie im Querschnitt.

**9.** Lichtleiter nach einem der vorangehenden Ansprüche, wobei auf über mindestens 30 % der Minimallänge des Lichtleiterelements (2) das Folgende zutrifft:

$$B_F > 0{,}7 * H_L,$$

wobei

$B_F$ = minimaler Querschnittskrümmungsradius der Vorderseite (4) des Lichtleiterelements (2), wobei Kantenverrundungen der Vorderseite (4) nicht berücksichtigt sind; und
$H_L$ = Maximalhöhe des Lichtleiterelements (2) im Querschnitt.

**10.** Lichtleiter nach einem der vorangehenden Ansprüche, wobei auf über mindestens 30 % der Minimallänge des Lichtleiterelements (2) das Folgende zutrifft:

$$Wc < 0{,}3 * D_L,$$

wobei

$Wc$ = Minimalbreite des Verbindungselements (8, 10) an dem Lichtleiterelement (2) parallel zu der Mittellinie im Querschnitt; und
$D_L$ = Maximaltiefe des Lichtleiterelements (2) im Querschnitt.

**11.** Aufnahmestruktur, umfasst durch ein Fahrzeug, zur Aufnahme eines Lichtleiters nach einem der Ansprüche 1 bis 10 über das Verbindungselement (8, 10).

**12.** Rückblickspiegel für ein Fahrzeug, umfassend eine Aufnahmestruktur zur Aufnahme eines Lichtleiters nach einem der Ansprüche 1 bis 10 über das Verbindungselement (8, 10).

**13.** Rückblickspiegel nach Anspruch 12, wobei die Vorderseite (4) des Lichtleiterelements (2) einen Teil der Außenfläche des Rückspiegels bildet.

**Revendications**

**1.** Guide de lumière pour utilisation dans un environnement automobile, de préférence comme partie d'un indicateur de direction et/ou d'une lampe pour éclairer une zone à l'intérieur ou à l'extérieur d'un véhicule, et adapté pour recevoir de la lumière d'une source lumineuse, le guide de lumière comprenant :

au moins un élément de guide de lumière (2) allongé ayant, en section transversale, une surface avant (4) pour découpler de la lumière du guide de lumière et une surface arrière (6) ayant des propriétés réfléchissantes, la surface avant (4) comprenant au moins partiellement une zone de découplage de lumière ; et

au moins un élément de connexion (8, 10) faisant saillie, dans ladite section transversale, à partir d'une surface supérieure et/ou inférieure de l'élément de guide de lumière (2) pour relier mécaniquement le guide de lumière à une structure de réception,

dans lequel l'élément de connexion (8, 10) est situé plus près de la surface arrière (6) de l'élément de guide de lumière (2) que de la surface avant (4), et la surface arrière (6) est au moins partiellement courbée de manière convexe dans ladite section transversale, et dans lequel de la lumière est couplée hors du guide de lumière à travers la surface avant (4), et

dans lequel la condition suivante s'applique à plus d'au moins 30 % de la longueur minimum de l'élément de guide de lumière (2) et à plus d'au moins 30 % de la hauteur maximum de l'élément de guide de lumière (2) dans la section transversale :

$$0{,}8 < (B_B/H_L + B_B/(10 * D_L)) < 30,$$

dans lequel

$B_B$ = rayon de courbure convexe de la surface arrière (6) de l'élément de guide de lumière en section transversale ;

$H_L$ = hauteur maximum de l'élément de guide de lumière (2) perpendiculaire à une ligne médiane en section transversale, où la ligne médiane va de la surface avant (4) à la surface arrière (6) à mi-hauteur maximum ; et

$D_L$ = profondeur maximum de l'élément de guide de lumière (2) le long de la ligne médiane en section transversale.

2. Guide de lumière selon la revendication 1, dans lequel l'élément de connexion (8, 10) et la surface arrière (6) de l'élément de guide de lumière (2) forment une surface commune et courbée de manière convexe en section transversale, de préférence sans pli.

3. Guide de lumière selon la revendication 1 ou 2, dans lequel la surface avant (4) est essentiellement plane ou convexe ou concave en section transversale.

4. Guide de lumière selon l'une quelconque des revendications précédentes, dans lequel le guide de lumière est un guide de lumière monobloc.

5. Guide de lumière selon l'une quelconque des revendications précédentes, dans lequel le guide de lumière est courbé le long de son axe longitudinal.

6. Guide de lumière selon l'une quelconque des revendications précédentes, dans lequel l'élément de guide de lumière (2) et l'élément de connexion (8, 10) sont formés d'un seul tenant.

7. Guide de lumière selon l'une quelconque des revendications précédentes, dans lequel l'élément de connexion (8, 10) faisant saillie à partir de l'élément de guide de lumière (2) à plus d'au moins 30 % de la longueur minimum de l'élément de guide de lumière (2).

8. Guide de lumière selon l'une quelconque des revendications précédentes, dans lequel la condition suivante s'applique à plus d'au moins 30 % de la longueur minimum de l'élément de guide de lumière (2) :

$$D_{CB} < 0{,}1 * D_L,$$

dans lequel $D_{CB}$ = distance minimum entre l'élément de connexion (8, 10) et la surface arrière (6) de l'élément de guide de lumière (2) parallèle à la ligne médiane en section transversale.

9. Guide de lumière selon l'une quelconque des revendications précédentes, dans lequel la condition suivante s'applique à plus d'au moins 30 % de la longueur minimum de l'élément de guide de lumière (2) :

$$B_F > 0{,}7 * H_L,$$

dans lequel

$B_F$ = rayon de courbure en section transversale minimum de la surface avant (4) de l'élément de guide de lumière (2), dans lequel des raccords de bord arrondis de la surface avant (4) ne sont pas pris en compte ; et
$H_L$ = hauteur maximum de l'élément de guide de lumière (2) en section transversale.

10. Guide de lumière selon l'une quelconque des revendications précédentes, dans lequel la condition suivante s'applique à plus d'au moins 30 % de la longueur minimum de l'élément de guide de lumière (2) :

$$Wc < 0{,}3 * DL,$$

dans lequel

$W_C$ = largeur minimum de l'élément de connexion (8, 10) au niveau de l'élément de guide de lumière (2) parallèle à la ligne médiane en section transversale ; et
$D_L$ = profondeur maximum de l'élément de guide de lumière (2) en section transversale.

11. Structure de réception comprise par un véhicule pour recevoir un guide de lumière selon l'une quelconque des revendications 1 à 10 via l'élément de connexion (8, 10).

12. Rétroviseur pour un véhicule comprenant une structure de réception pour recevoir un guide de lumière selon l'une quelconque des revendications 1 à 10 via l'élément de connexion (8, 10).

13. Rétroviseur selon la revendication 12, dans lequel la surface avant (4) de l'élément de guide de lumière (2) fait partie de la surface extérieure du rétroviseur.

Fig. 1a (Prior Art)

Fig. 1b (Prior Art)

Fig. 2 (Prior Art)

Fig. 3a (Prior Art)

Fig. 3b (Prior Art)

Fig. 3c (Prior Art)

Fig. 4a

Fig. 4b

Fig. 5

Fig. 6

Fig. 7a

Fig. 7b

Fig. 7c

Fig. 7d

Fig. 7e

Fig. 8a          Fig. 8b          Fig. 8c          Fig. 8d

Fig. 9

| Cross-section geometry | Attenuation (straight) | Attenuation (bent) | Comment |
|---|---|---|---|
|  | 36.7% | 39.2% | State of the art |
|  | 53.3% | 49.6% | Highest light leakage |
|  | 42.9% | 46.8% | Standard, State of the art |
|  | 43.5% | 38.4% | High light leakage |
|  | 50.5% | 41.9% | High light leakage |
|  | 34.1% | 34.2% | New, good result |
|  | 30.6% | 30.2% | New, best result |
|  | 35.6% | 35.8% | New, good result |

Fig. 10

| R (mm) | H / D | B / H | B / D | attenuation | B / H + B / (10 * D) |
|--------|-------|-------|-------|-------------|----------------------|
| 200 | 1 | 0,6 | 0,6 | 52,6% | 0,66 |
| 200 | 1 | 0,7 | 0,7 | 48,6% | 0,77 |
| 200 | 1 | 0,8 | 0,8 | 43,3% | 0,88 |
| 200 | 1 | 1 | 1 | 40,0% | 1,1 |
| 200 | 1 | 1,5 | 1,5 | 37,8% | 1,7 |
| 200 | 1 | 2 | 2 | 36,7% | 2,2 |
| 200 | 1 | 3 | 3 | 36,7% | 3,3 |
| 200 | 1 | 5 | 5 | 38,0% | 5,5 |
| 200 | 1 | 10 | 10 | 40,6% | 11 |
| 200 | 1 | 100 | 100 | 44,9% | 110 |
| | | | | | |
| 200 | 0,5 | 0,7 | 0,35 | 34,1% | 0,74 |
| 200 | 0,5 | 0,8 | 0,4 | 30,7% | 0,84 |
| 200 | 0,5 | 1 | 0,5 | 29,1% | 1,1 |
| 200 | 0,5 | 2 | 1 | 30,7% | 2,1 |
| 200 | 0,5 | 3 | 1,5 | 30,8% | 3,2 |
| 200 | 0,5 | 5 | 2,5 | 30,6% | 5,3 |
| 200 | 0,5 | 10 | 5 | 32,1% | 10,5 |
| 200 | 0,5 | 100 | 50 | 34,7% | 105 |
| | | | | | |
| 200 | 2 | 0,55 | 1,1 | 30,2% | 0,66 |
| 200 | 2 | 0,6 | 1,2 | 28,5% | 0,72 |
| 200 | 2 | 0,75 | 1,5 | 26,8% | 0,9 |
| 200 | 2 | 1 | 2 | 23,2% | 1,2 |
| 200 | 2 | 2 | 4 | 24,7% | 2,4 |
| 200 | 2 | 5 | 10 | 27,2% | 6 |
| 200 | 2 | 10 | 20 | 29,2% | 12 |
| 200 | 2 | 20 | 40 | 30,4% | 24 |
| 200 | 2 | 50 | 100 | 30,8% | 60 |
| 200 | 2 | 500 | 1000 | 31,6% | 600 |

Fig. 11a

| R (mm) | H / D | B / H | B / D | attenuation | B / H + B / (10 * D) |
|--------|-------|-------|-------|-------------|----------------------|
| 100 | 1 | 0,6 | 0,6 | 50,2% | 0,66 |
| 100 | 1 | 0,7 | 0,7 | 45,6% | 0,77 |
| 100 | 1 | 0,8 | 0,8 | 41,0% | 0,88 |
| 100 | 1 | 0,9 | 0,9 | 39,3% | 0,99 |
| 100 | 1 | 1 | 1 | 36,8% | 1,1 |
| 100 | 1 | 1,5 | 1,5 | 34,0% | 1,65 |
| 100 | 1 | 2 | 2 | 32,1% | 2,2 |
| 100 | 1 | 3 | 3 | 32,2% | 3,3 |
| 100 | 1 | 5 | 5 | 33,2% | 5,5 |
| 100 | 1 | 10 | 10 | 35,3% | 11 |
| 100 | 1 | 20 | 20 | 37,1% | 22 |
| 100 | 1 | 100 | 100 | 38,9% | 110 |
| 100 | 1 | 1000 | 1000 | 39,4% | 1100 |
| | | | | | |
| 400 | 1 | 0,7 | 0,7 | 50,6% | 0,77 |
| 400 | 1 | 0,8 | 0,8 | 46,0% | 0,88 |
| 400 | 1 | 1 | 1 | 42,6% | 1,1 |
| 400 | 1 | 1,5 | 1,5 | 40,9% | 1,65 |
| 400 | 1 | 2 | 2 | 40,3% | 2,2 |
| 400 | 1 | 3 | 3 | 40,6% | 3,3 |
| 400 | 1 | 5 | 5 | 41,9% | 5,5 |
| 400 | 1 | 10 | 10 | 44,9% | 11 |
| 400 | 1 | 20 | 20 | 47,8% | 22 |
| 400 | 1 | 100 | 100 | 50,2% | 110 |
| 400 | 1 | 1000 | 1000 | 50,8% | 1100 |

Fig. 11b

21

**EP 3 081 854 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120170304 A1
- US 20150009707 A1